# EUROPÄISCHE PATENTSCHRIFT

(11) **EP 0 909 783 B1**
(45) Veröffentlichungstag und Bekanntmachung des Hinweises auf die Patenterteilung: **14.02.2001**
(21) Anmeldenummer: 98118248.8
(22) Anmeldetag: 25.09.1998
(51) Int. Cl.: C08J 9/32

(54) **Reaktionsmischung zur Abdichtung von Rohrverbindungen, Sanierverfahren und Verwendung**
Reaction mixture for sealing pipe-joints, renovation process and use
Mélange réactionnel pour rendre des raccords de tuyaux étanche, procédé de réparation et utilisation

(30) Priorität: 17.10.1997 DE 19745981
(43) Veröffentlichungstag der Anmeldung: 21.04.1999
(73) Patentinhaber: Maagh Leitungsbau GmbH, 53119 Bonn (IT)
(72) Erfinder: Maagh, Peter, 53757 Sankt Augustin (DE)
(74) Vertreter: Sieckmann, Ralf, Dr.

(56) Entgegenhaltungen:
- EP-A- 0 713 900
- WO-A-94/00504
- WO-A-96/00754
- DE-A- 3 100 746
- US-A- 3 472 798
- DATABASE WPI Week 9235 Derwent Publications Ltd., London, GB; AN 285282 XP002088910 "component polyurethane system joint stone pipe polyol component " A & DD 299 120 A (BASF SCHWARZHEIDE/ VER STEINZEUGWERKE) 2. April 1992

## Beschreibung

Die Erfindung betrifft eine Reaktionsmischung mit mehreren Komponenten auf Basis eines hochhydrolyse-beständigen 2-komponentigen Polyurethansystems, insbesondere zur Abdichtung von Rohrverbindungen in Abwasserkanälen. Die Erfindung betrifft ebenfalls ein Verfahren zur Sanierung von Rohrleitungen, beispielsweise in Abwasserkanälen mit Hilfe der erfindungsgemäßen Reaktionsmischung, die Verwendung der Reaktionsmischung als Dichtmasse sowie eine Verwendung einer Vorrichtung zum Mischen der Komponenten der Reaktionsmischung bei genanntem Verfahren.

Bei der Überprüfung alter Abwasserkanäle stellt sich häufig heraus, daß diese insbesondere an den Rohrverbindungen undicht und damit sanierungsbedürftig sind. Aus der DE-A 42 32 059 und der DE-C 44 09 886 sind ein Verfahren und eine Vorrichtung zum Sanieren des Verbindungsbereiches von vorzugsweise nicht begehbaren Rohrleitungen, insbesondere Abwasserleitungen bekannt, bei dem unter Verwendung eines Packers die Dichtungsmasse, die in der Mischkammer des Packers aus mindestens zwei Komponenten entstanden ist, unter Druck aus der Mischkammer in den zu sanierenden Verbindungsbereich eingespritzt wird, und im behandelten Rohrleitungsbereich insgesamt einen bleibenden Preßdruck der Einzelelemente dadurch erzielt, daß man eine solche Dichtmasse einspritzt, die nach ihrem Erstarren durch Volumenvergrößerung einen bleibenden Druck auf ihre Umgebung ausübt.

Die gewünschten Eigenschaften einer derartigen Dichtmasse sind also theoretisch bekannt, jedoch konnte bislang keine Dichtmasse entwickelt werden, die den tatsächlichen Anforderungen beim Einsatz zur Dichtung von Abwasserkanälen genügt.

So wurden bisher üblicherweise 2-komponentige flüssige Injektionsmischungen als Dichtmasse verwendet, die mit Hilfe des Packers in den Ringspalt des Verbindungsbereichs der Kanalrohre eingespritzt werden. Diese Mischungen härten in einer exothermen Reaktion innerhalb des Ringspaltes aus und sollen dabei eine dauerhafte und elastische Dichtung bilden. Hierbei ergibt sich das Problem, daß das Endprodukt aufgrund der exothermen Reaktion immer bei erhöhter Temperatur entsteht und daher beim späteren Abkühlen im Volumen schwindet. Eine weiteres Schwinden der Dichtung entsteht auch durch Vernetzungsreaktionen, die die Dichte des Materials erhöhen und durch Abgabe von Wasser (Synärese). Durch das Schwinden kann ein Ablösen des neu aufgebrachten Dichtmaterials von den Rohrelementen stattfinden, so daß die Dichtung fehlerhaft ist und wiederholt werden muß.

Der Einsatz aufschäumender Polyurethan-Mischungen als Dichtmaterial sollte dieses Schwinden verhindern und zu einem Kompressionsdruck in der Dichtung führen, mit dem das Dichtmaterial gegen die Dichtflächen gedrückt wird. Das Aufschäumen erfolgt durch eine Verbindung des Dichtmaterials mit Wasser, wobei Kohlendioxid entsteht, das die Schaumbildung verursacht. Durch die Volumenzunahme bei der Schaumbildung wird ein Druck in der Dichtmasse erzeugt, der jedoch durch die Undichtigkeit im Kanal abgebaut wird. Diese Problem ergibt sich dadurch, daß während der Schaumbildung das Dichtmaterial noch flüssig ist und daher durch die Undichtigkeit entweicht. Erst nach erfolgter Aufschäumung erstarrt das Material völlig. Zu diesem Zeitpunkt ist jedoch der Druck in der Masse abgebaut. Darüber hinaus schwindet das Dichtmaterial aus den oben genannten Gründen, so daß auch hier kein Kompressiondruck der Dichtmasse auf die Dichtflächen ausgeübt wird. Weiterhin ist es bei diesen unter Wasserzugabe schäumenden Polyurethanmischungen ein großes Problem, daß die Aufschäumung sehr stark von der vorhandenen Wassermenge im Kanal abhängt. Diese Situation kann jedoch nicht kontrolliert werden und führt zu unerwünschten Ergebnissen.

Es wird weiterhin als Nachteil empfunden, daß die Aushärtungszeiten eines Teils der bisher verwendeten Materialien zu lang sind und daher der Packer pro Dichtstelie eine lange Verweilzeit benötigt. Ein so zeitaufwendiges Verfahren ist jedoch unrentabel.

Die DE-31 00 746 A1 betrifft eine geschäumte, wasserdichte zug- und druckelastische Dichtmasse aus Polyurethan, die nach dem Austritt aus einem Behälter vernetzt und somit fest wird, wobei diese kleinste druckelastische Mikrohohlkugeln enthält, deren dünne Hülle aus Vinylidenchlorid-Acrylnitril-Copolymerisat besteht und deren hohler Kern ein Gas enthält. Hierdurch wird allerdings die erfindungsgemäße ternäre Reaktionsmischung weder offenbart noch nahegelegt.

Die DE-C-196 11 594 betrifft ein Komponentengemisch auf Grundlage eines Polyurethanprepolymers mit wenigstens einem Wirk- oder Füllstoff zur Herstellung einer geschäumten Dichtungs- und Isoliermasse, das sukzessiv oder gleichzeitig in einen Druckbehälter einfüllbar ist und auch Mikrokugeln enthält, bei der aber zwingend vorausgesetzt wird, daß die Mikrohohlkugeln eine äußere Beschichtung eines anorganischen, schwer löslichen Erdalkalicarbonats oder -sulfats oder -oxids aufweist.

Die EP-A-686 660 betrifft einen lärmabsorbierenden, syntaktischen Schaum, enthaltend expandierte Polystyrolmikrokugeln, die statisch in einer Polyurethanmatrix verteilt sind.

Das US-Patent 5,585,412 betrifft ein Verfahren zur Herstellung eines flexiblen Polyurethanschaums durch Umsetzung einer Reaktionsmischung eines Polyols, eines anorganischen Isocyanats, Wasser sowie eines verkapselten Expansionsmittels mit einer Schale und einer Hülle.

Das US-Patent 5,272,001 betrifft ein Verfahren zur Herstellung von Polyurethanschaum niederer Dichte, welches hervorragende schallabsorbierende Eigenschaften hat und erhalten wird durch Bildung eines offenzelligen Polyurethanschaums niederer Dichte, Imprägnierung des offenzelligen Schaukörpers mit nicht expandierten Mikrokugeln, die eine flüchtige Flüssigkeit aufweisen und die in einer thermoplastischen Hülle verkapselt ist.

Die Europäische Patentanmeldung 733 672 betrifft ein Verfahren zur Herstellung eines geschäumten, weichelastischen Silikonelastomeren unter Verwendung eines 2-komponentigen, additionsvernetzten Silikonsystems, wobei mindestens eine der beiden Komponenten als Füllstoff und Streckungsmittel mikroelastische Mikrohohlkugeln in Form von expandierten Polymerhochkugeln zugesetzt werden, die mit einer anorganischen mineralischen Umhüllung versehen sind.

Die Europäische Patentanmeldung 196 792 betrifft eine flüssige Dichtzusammensetzung, die eine wässerige Dispersion eines viscoelastischen Polymers enthält, wobei diese weiterhin Mikrohohlkugeln eines thermoplastischen polymeren Materials aufweist, die ein flüssiges Expansionsmittel enthalten.

Die DE 44 09 886 A1 betrifft ein Verfahren zum Sanieren von Rohrmuffen mittels einer Dichtungsmasse, diese Dichtungsmasse ist allerdings nicht im einzelnen definiert.

Die DE 39 13 318 A1 betrifft ein Verfahren zur partiellen Instandsetzung defekter, nicht begehbarer Leitungsquerschnitte aufweisender Kanäle mit Injektionsmitteln auf Basis von Polyurethanharzen, wobei das Injektionsmittel in den abgeschlossenen Raum zwischen den Verspannungsmanschetten eingepreßt wird und wobei die Komponenten des Polyurethanharzes bis in den Packer getrennt gepumpt werden. Hier ist allerdings weder beschrieben noch nahegelegt, anstelle eine Polyurethansystems allgemein das erfindungsgemäß eingesetzte Dreikomponentensystem zu verwenden.

WO 9400504 A betrifft eine Mehrkomponenten-Reaktionsmischung aus Basis eines 2-komponentigen PU-Systems, wobei 3 bzw 4Gew-% expandierbare Mikroperlen auf 97 bzw. 96 Gew.-% des restlichen PU-Systems kommen. Diese Mikroperlen sind expandierbare Isobutangefüllte Vionylidenchlorid-Acrylnitril-Copolymer-Mikroperlen, die aber zugleich auch Mikrowellenenergie absorbieren können (s. US-A 5 272 001)

Aufgabe der Erfindung ist es, eine Reaktionsmischung mit mehreren Komponenten auf Basis eines hochhydrolyse-beständigen 2-komponentigen Polyurethan-Systems zur Abdichtung, insbesondere von Rohrverbindungen oder Hausanschlüssen in Abwasserkanälen bereitzustellen, die neben einer Dichtung durch Adhäsion nach dem Aushärten auch einen Kompressionsdruck auf die Dichtflächen ausübt, elastisch und alterungsbeständig ist und daneben eine kurze Aushärtungszeit aufweist.

Die Lösung dieser Aufgabe erfolgt durch eine Reaktionsmischung mit mehreren Komponenten auf Basis eines hochhydrolysebeständigen 2-komponentigen Polyurethan-Systems, insbesondere zur Abdichtung von Rohrverbindungen von Rohrleitungen, beispielsweise in Abwasserkanälen, die dadurch gekennzeichnet ist, daß die Reaktionsmischung, bezogen auf die Gesamtmischung, ein Gemisch aus 70 bis 99 Gewichtsprozent des 2-komponentigen Polyurethan-Systems mit weiteren Inhaltsstoffen und 1 bis 30 Gewichtsprozent Mikroperlen sowie weiterhin 0,5 bis 30 Gewichtsteile wenigstens eines speziellen thermodynamisch aktiven Mittels, bezogen auf 100 Gewichtsteile der Reaktionsmischung enthält.

Die vorliegende Erfindung betrifft daher eine Reaktionsmischung mit mehreren Komponenten auf Basis eines hochhydrolysebeständigen 2-komponentigen Polyurethan-systems, insbesondere zur Abdichtung von Rohrverbindungen von Rohrleitungen, beispielsweise in Abwasserkanälen, wobei die Reaktionsmischung, bezogen auf die Gesamtmischung, ein Gemisch aus 70 bis 99 Gewichtsprozent des 2-komponentigen Polyurethansystems mit weiteren Inhaltsstoffen und 1 bis 30 Gewichtsprozent Mikroperlen aufweist, wobei diese Reaktionsmischung weiterhin 0,5 bis 30 Gewichtsteile wenigstens eines thermodynamisch aktiven Mittels, bezogen auf 100 Gewichtsteile der Reaktionsmischung, enthält, wobei das thermodynamisch aktive Mittel ein Wärmeleiter und / oder ein Mikrowellen oder Infrarot bis Ultraviolettstrahlenabsorbierendes Mittel aus der Gruppe der Pulver oder Granulate von Metallen, der Pulver oder Granulate von Siliziumcarbid, Aluminiumoxid, Aluminiumnitrid, Ruß, Graphit, Aktivkohle, Glimmer und Mischungen davon, der Ferrite, der Farbstoffe oder in Mineralien oder Mikrokugeln gebundenes Wasser ist.

Durch die Verwendung des hochhydrolyse-beständigen PolyurethanSystems wird sichergestellt, daß es auch bei Anwesenheit von Wasser nicht zu einem Aufschäumen der Reaktionsmischung kommt. Daher ist diese Reaktionsmischung auch bei feuchten Untergründen anwendbar und härtet zu einer kompakten elastischen Dichtmasse aus.

Bevorzugt erzeugt diese Mischung eine exotherme Reaktion mit eine einstellbare Maximaltemperatur von bis zu 150 Grad Celsius.

Das Vorhandensein von 1 bis 30 Gewichtsprozent Mikroperlen in der Gesamtmischung ermöglicht zudem eine kontrollierte Vergrößerung der Dichtmasse, so daß hier eine Dichtwirkung zwischen den Rohrflächen und der ausgehärteten Reaktionsmischung nicht nur durch Adhäsion, sondern auch durch einen Kompressionsdruck erreicht wird, was bewirkt, daß Zugspannungen in den Rohren überkompensiert werden und die neue Dichtung auch gegenüber drückenden

Medien, wie z.B in einen Kanal eintretendes Grundwasser oder auch austretendes Abwasser, dicht ist.

Es wird als vorteilhaft empfunden, wenn die Reaktionsmischung aus zwei Polyurethankomponenten (Polyol / Polyisocyanat) mischbar ist. Das Mischungsverhältnis liegt dabei zwischen 100:10 bis 100:100, vorzugsweise zwischen 100:10 bis 100:40. Hierdurch ist gewährleistet, daß die Reaktionsmischung erst unmittelbar vor dem Einspritzen in den Ringbereich einer Rohrverbindung vor Ort gemischt werden kann. Dies ist wichtig, da die Reaktionsmischung eine einstellbare und/oder eingestellte Topfzeit von 5 bis 120 Sekunden und eine ebenfalls einstellbare Aushärtungszeit von 2 bis 60 Minuten aufweist. Anderenfalls besteht die Gefahr, daß die Reaktionsmischung schon auf dem Weg zum Anwendungsort in der Zuführungsleitung aushärtet. Die Topfzeit (nach DIN 16920) und Aushärtungszeit werden sowohl von dem Mischungsverhältnis als auch von der Temperatur der beiden Komponenten und von weiteren Zusatzstoffen beeinflußt.

Die kurze Aushärtungszeit, die auf bis zu 2 Minuten reduzierbar ist, gewährleistet in einem Verfahren zur Sanierung nun Rohrverbindungen, bei dem die erfindungsgemäße Reaktionsmischung eingesetzt wird, daß pro Zeiteinheit mehr undichte Stellen repariert werden können, als mit Dichtmassen nach dem Stand der Technik.

Die eine Polyurethankomponente der erfindungsgemäßen Reaktionsmischung enthält hochhydrolyse-beständige aliphatische und/oder aromatische Polyole, die andere Komponente, die als Härter verwendet wird, enthält ein Polyisocyanat, insbesondere ein aromatisches Diisocyanat. Nach der Vermischung der beiden Komponenten härten diese in einer exothermen Reaktion, die eine Temperatur von bis zu 150 Grad Celsius erzeugt, aus. Auch die maximal erreichbare Reaktionstemperatur ist durch weitere Zusatzstoffe einstellbar.

Die Polyol-Komponente, die als Polyurethan-Harz verwendet wird, kann aus mit ungesättigten Säuren (z.B. mit Tallöl) partiell veresterten Polyalkoholen (z.B. Glycerin, Pentaerythrit) und Diisocyanaten bestehen, da diese Harze den üblichen Alkydharzen, entsprechend der Aufgabe der Erfindung, hinsichtlich der Aushärtungsgeschwindigkeit und der Hydrolysebeständigkeit weit überlegen sind.

Als Härter kommen aliphatische und/oder aromatische Polyisocyanate in Betracht. Die gebräuchlichsten aliphatischen Polyisocyanate sind beispielsweise: 1, 6-Diisocyanatohexan (Desmodur H, Bayer AG), 3,5,5-Trimethyl-1-isocyanato-3-isocyanatomethyl-cyclohexan (Isophorondiisocyanat, IPDI, VEBA AG), Dimeryldiisocyanat (GENERAL MILLS INC.), 4,4'-Diisocyanato-dicyclohexylmethan (Desmodur W, BAYER AG), 2, 6-Diiso-cyanatohexansäuremethylester (Lysinester-diisocyanat, MERKINC). Die wichtigsten Vertreter der aromatischen Polyisocyanate sind beispielsweise: Diisocyanatotoluol (TDI), 1,5-Diisocyanato-naphthalin (NDI), 4,4'-Diisocyanato-diphenyl-methan (MDI), wobei es hier auch urethanisierte und carbodiimidisierte Formen gibt. Besonders bevorzugt ist der Einsatz aromatischer Polyisocyanate, insbesondere MDI.

Die Mikroperlen, die der Gesamtmischung beigegeben sind, sind ab einer definierten Aktivierungstemperatur, die oberhalb von 50 °C liegt, im Volumen vergrößerbar. Durch diese erst bei der bestimmten Temperatur einsetzende Volumenvergrößerung der Mikroperlen ist es möglich, innerhalb der ausgehärteten Reaktionsmasse einen Kompressionsdruck zwischen Dichtmasse und Dichtfläche zu erzeugen. Der wesentliche Unterschied zum Druckaufbau in der Polyurethan-Mischung nach dem Stand der Technik, der effektiv wieder verloren geht, liegt bei der erfindungsgemäßen Reaktionsmischung darin, daß während der Reaktion Wärme freigesetzt wird, die sich aufgrund einer langsamen Wärmeleitung in der Mischung aufakkumuliert. Daher wird die Maximaltemperatur der Mischung erst zu einem Zeitpunkt erreicht, wenn diese schon weitestgehend ausgehärtet ist. Wird daher die Aktivierungstemperatur der Mikroperlen etwas geringer gewählt als die maximal erreichbare Reaktionstemperatur, so kann die Volumenvergrößerung der Mikroperlen vollständig zum Aufbau eines Kompressionsdruckes genutzt werden, da der Druck in der erstarrten Dichtmasse nicht mehr durch die Undichtigkeit im Kanal entweichen kann. Die Volumenvergrößerung der Expansionsmittel ist im vorliegenden Fall also direkt durch die entstehende Reaktionswärme initiierbar.

Der erzeugte Kompressionsdruck ist bei der erfindungsgemäßen Reaktionsmischung im ausgehärteten Zustand so groß, daß ein evtl. Schrumpfen der Dichtung überkompensiert wird. Die aus dem Stand der Technik bekannten Probleme der Ablösung der Dichtmasse von den Dichtfläche bei Auskühlung besteht hier nicht mehr.

Als besonders vorteilhaft wird bei der Verwendung der Mikroperlen empfunden, daß es auch möglich ist, eine Volumenvergrößerung durch von außen zugeführte Wärme oder elektromagnetische Strahlung mit einer Wellenlänge von 10 nm bis 1 m zu initiieren, wobei eine Volumenvergrößerung auch noch nach vollständigem Aushärten der Reaktionsmischung möglich ist. Unter elektromagnetischer Strahlung in dem vorgenannten Wellenlängenbereich versteht man üblicherweise UV-Strahlung bis Infrarotstrahlung oder Mikrowellenstrahlung. Sollte sich also einmal erneut eine Undichtigkeit an einer mit der erfindungsgemäßen Reaktionsmischung behandelten Stelle ergeben, so braucht die Dichtung nur nochmals geheizt werden, um eine erneute Volumenvergrößerung hervorzurufen. Hierzu ist es als vorteilhaft anzusehen, wenn die Reaktionsmischung mehrere unterschiedliche Mikroperlen mit ebenso unterschiedlichen Aktivierungstemperaturen enthält, so daß hier eine stufenweise Volumenvergrößerung realisierbar ist. Eine Erwärmung der Dichtmasse von außen kann neben der oben angegebenen Strahlungserwärmung auch durch Konvektionserwärmung oder Wärmeleitung erfolgen.

Die Mikroperlen bestehen vorzugsweise aus 5 bis 300 Mikrometer großen Mikroperlen, die ein Treibmittel als Kern aufweisen, das gegenüber der Perlenhülle wenigstens 6 Monate inert ist und einen Siedepunkt von -100 bis +10 Grad Celsius aufweist.

Insbesondere können die Hüllen der Mikroperlen aus einem thermoplastischem Vinylidenchlorid-Acrylnitril-Copolymer bestehen, wobei das Treibmittel ausgewählt ist aus gegebenenfalls halogenierten Kohlenwasserstoffen und Olefinen. Als konkrete Treibmittel sind z.B. Isobutan, Butan, Isobuten oder Buten oder halogenierte, vorzugsweise fluorierte Derivate möglich.

Bei diesen Mikroperlen wird die Hülle oberhalb einer für das Hüllenmaterial typischen Temperatur plastisch verformbar, so daß die Perlen unter dem Druck des Treibmittel expandieren. Wird das Temperaturmaximum in der Dichtmasse überschritten und kühlen die Perlen wieder unter die typische Temperatur ab, so erhärtet das Hüllenmaterial und die Perlen bleiben im expandierten Zustand bestehen, wobei durch die vergrößerten Perlen der Kompressionsdruck aufgebaut wird. Statt der thermoplastischen Mikroperlen ist es auch denkbar, andere expandierende Mittel, wie Perlen aus thermoplastischen Schaumstoffen, beispielsweise aus expandierbarem Polystyrol oder Mikrokugeln aus einem elastischen Material mit Gasfüllung einzusetzen, wobei letztere allgemein eine geringere Aktivierungstemperatur haben als thermoplastische Mikroperlen.

Für die Einstellung der Parameter der Reaktionsmischung, wie die Härte der resultierenden Dichtmasse, die Elastizität, die maximale Reaktionstemperatur, Topf- und Aushärtungszeiten ist es vorteilhaft, wenn mindestens eine Komponente der Reaktionsmischung, vorzugsweise die Polyolkomponente weitere Füllstoffe, Katalysatoren, Molekularsiebe, Entgasungsmittel und Absetzhemmer enthält. Diese Zusatzstoffe können aber auch der Isocyanatkomponente beigemischt werden.

Hierbei ist es zu empfehlen, daß die Reaktionsmischung bezogen auf die Gesamtmischung, 0 bis 3 Gewichtsprozent eines Katalysators, z.B. Dibutylzinndilaurat, zur Beeinflussung der Topf- und Aushärtungszeiten, 0 bis 20 Gewichtsprozent eines Füllstoffs, beispielsweise Calciumcarbonat, 0 bis 15 Gewichtsprozent eines Wärmeleiters, beispielsweise Graphit, zur Homogenisierung der Temperaturverteilung und zur Bestimmung der Maximaltemperatur, 0 bis 3 Gewichtsprozent Molekularsiebe zum Binden von Wasser, um ein Schäumen zu verhindern, 0 bis 3 Gewichtsprozent Entgasungsmittel und 0 bis 3 Gewichtsprozent Absetzhemmer zur gleichmäßigen Verteilung der Zusatzstoffe in der Mischung umfaßt.

Das thermodynamisch aktive Mittel ist ausgewählt aus einem Wärmeleiter und/oder Strahlungabsorber.

Bei dem erfindungsgemäß in der thermodynamisch aktiven Komponente in Form eines Wärmeleiters eingesetzten Mittels handelt es sich um ein Pulver oder ein Granulat eines Metalls, beispielsweise Aluminium, Kupfer, Silber oder Eisen oder einer entsprechenden Metallmischung, eines Pulvers oder eines Granulats von Siliciumcarbid, Aluminiumoxid oder Aluminiumnitrid, ein Pulver oder Granulat von Ruß, Graphit, Aktivkohle sowie von Glimmer oder um eine Mischung der vorgenannten Stoffe. Bei dem erfindungsgemäß als eine der Komponenten eingesetzten thermodynamisch aktiven Mittels eines Strahlungsabsorbers handelt es sich entweder um ein Mikrowellen absorbierendes Mittel, wie Ferrite, Graphit oder in Mineralien wie z.B. Ton, Montmorillonit oder Mikrokugeln gebundenes Wasser oder ein Infrarot- bis Ultraviolettstrahlen absorbierendes Mittel wie Farbstoffe, Ruß, Kunststoffe und Graphit.

Unter einem thermodynamischen Stoff im Sinne der vorliegenden Erfindung soll, wie die vorgenannten Ausführungen ergeben, ein Mittel verstanden sein, welches der Steuerung der Temperatur der Reaktionsmischung dient. Ein solches Mittel kann auf zwei Arten wirken. Es muß entweder eine relativ zum Polyurethan hohe Wärmeleitfähigkeit haben, um die durch die Polyurethanbildungsreaktion erzeugte Temperaturverteilung zu beeinflussen, das heißt ein Wärmeleiter sein oder er muß als Absorber für eine Strahlungserwärmung von außen dienen, also ein Strahlungsabsorber sein.

Zur Beinflussung der Reaktionsgeschwindigkeit können als Katalysator sowohl LEWIS-Basen als auch LEWIS-Säuren verwendet werden. Als wichtigste Basen sind tertiäre Amine wie z.B. Diaza-bicyclo-octan (Dabco), Triäthylamin, Dimethylbenzylamin (Desmorapid DB, BAYER AG), Bis-dimethylaminoäthyäther (Catalyst A 1, UCC), Tetramethylguanidin, Bis-dimethylaminomethyl-phenol zu nennen. Die wichtigsten katalytisch wirkenden Säuren sind zinnorganische Verbindungen, wie Zinn-diäthylhexoat (Zinndioctoat), Dibutylzinn-dilaurat, Dibutylzinn-bis-dodecylmercaptid, Blei-phenyläthyldithiocarbaminat. Hierbei erhöhen die Metallkatalysatoren die Elektrophilie der Isocyanatgruppen und die Basen die Nucleophilie der OH-Gruppen.

Zum Binden von Wasser finden als Molekularsiebe hauptsächlich natürliche und synthetische Zeolithe, wie Alkali- oder Erdalkalikationen enthaltende Aluminiumsilikate Verwendung.

Neben der Adhäsion der Dichtmasse auf den Dichtflächen und dem erzeugten Kompressionsdruck zwischen Dichtmasse und Dichtfläche wird eine Dichtwirkung an den Leckstellen auch durch formschlüssiges Auffüllen der Leckstellen mit der Dichtmasse bewirkt, so keine weiteren Wege für ein- oider austretendes Wasser verbleibt. Darüber hinaus ergibt sich bei einer entsprechend gewählten Anordnung der Dichtung in der Rohrverbindung, z.B. direkt vor dem Ende des in eine Muffe eingeschobenen Rohres, auch der Effekt der Querdehnung der Dichtung, die dabei durch die einwirkenden Kräfte einen weiteren Druck auf die Dichtfläche des Rohres erzeugt.

Es ist zu erwähnen, daß die in der erfindungsgemäßen Reaktionsmischung eingesetzten thermoplastischen Mikroperlen, nicht nur in 2-komponentigen Polyurethan-Mischungen eingesetzt werden können, um einen effektiven Kompressionsdruck zwischen Dichtung und Dichtfläche zu erreichen. So ist es auch denkbar diese Mikroperlen in Dichtmassen aus Acrylaten, Silikonen oder anderen geeigneten elastischen Dichtungsmaterialen einzusetzten.

Die erfindungsgemäße Reaktionsmischung ist als Dichtmasse in Verfahren zum Sanieren von Rohrverbindungen und/oder Hausanschlüssen von Rohrleitungen einsetzbar. Hierbei handelt es sich vorzugsweise um Verfahren zum Sanieren des Verbindungsbereichs von vorzugsweise nicht begehbaren Rohrleitungen, insbesondere Abwasserleitungen, wobei man unter Verwendung eines Packers die erfindungsgemäße Reaktionsmasse als Dichtmasse, die in einer Mischkammer des Packers aus mindestens zwei Komponenten entstanden ist, unter Druck aus der Mischkammer in den zu sanierenden Rohrleitungsbereich einspritzt und im behandelten Rohrleitungsbereich insgesamt einen bleibenden Preßdruck der Einzelelemente dadurch erzielt, daß die Reaktionsmischung nach ihrem Erstarren durch Volumenvergrößerung einen bleibenden Druck auf ihre Umgebung ausübt. Ein derartiges Verfahren ist in der DE-A 42 32 059 ausführlich beschrieben.

Besonders vorteilhaft ist bei dem Einsatz der erfindungsgemäßen Reaktionsmischung in dem Verfahren, daß das Volumen der Reaktionsmischung durch eine Ausdehnung der Expansionsmittel während des Aushärtungsprozesses vergrößert wird, wobei die Volumenvergrößerung aufgrund der Temperaturentwicklung bei der Reaktion dann stattfindet, wenn die Mischung schon erstarrt ist. Als positiv ist hervorzuheben, daß bei dem Sanierungsverfahren das Volumen auch durch eine Aufheizung der vollständig ausgehärteten Reaktionsmischung, insbesondere durch Mikrowellenheizung oder andere vorgenannte Heizmethoden vergrößert wird. Dies ist besonders dann wünschenswert, wenn die undichte Stelle bereits mit der erfindungsgemäßen Reaktionsmischung behandelt wurde.

Um eine Kontrolle über die Verarbeitungszeiten und den Abschaltzeitpunkt der Einspritzung zu haben, ist es sinnvoll, daß bei dem Verfahren der Einspritzvorgang durch Messung des Einspritzdruckes, der Einspritzmenge und der Verarbeitungstemperatur kontrolliert wird. Die Topfzeit der Reaktionsmischung wird hierbei durch eine Heizung der Komponenten, insbesondere der Vorratsbehälter, der Zuführungsschläuche und der Mischkammer, gesteuert.

Da die Komponenten der Reaktionsmischung vor dem Einspritzvorgang in der Mischkammer des Packers gemischt werden, besteht die Gefahr, daß diese Mischkammer durch die schnelle aushärtende Reaktionsmischung zugesetzt wird. Um dies zu umgehen, wird bei dem Verfahren die Mischkammer nach der Einspritzung mit der polyolhaltigen Komponente gespült, die dann vor der nächsten Einspritzung in einen Auffangbehälter innerhalb des Packers geleitet wird. Nach einer erfolgten Sanierung eines Kanals wird die Mischkammer dann mit einen Lösungsmittel gespült und anschließend mit Luft getrocknet. Die Mischkammer kann dann für folgende Sanierungseinsätze immer wieder verwendet werden.

Um die beiden Komponenten der schnell aushärtenden Reaktionsmischung zu vermischen kommt im erfindungsgemäßen Verfahren eine neue Mischkammer zum Einsatz, die zwei voneinander getrennte Einlässe aufweist, durch die die beiden Komponenten es erfindungsgemäßen Reaktionsgemisches in die Kammer einleitbar sind, und weiterhin einen Auslaß hat, durch den das fertig gemischte Reaktionsgemisch aus der Kammer herausleitbar ist, wobei im Inneren der Kammer die beiden Komponenten durch einen Rotor vermischbar sind. Gegenüber bekannten Mischern, die als statische und Hochdruckmischer bezeichnet werden, hat diese Kammer den Vorteil, daß die beiden Komponenten mit Viskositäten von 1 bis 10⁶ mPa*s, einem Füllstoffanteil von bis zu 30 Gewichtsprozent und Mischungsverhältnissen von bis zu 1000:1 mischbar sind. Die Mischkammer ist so ausgelegt, daß sie mit Lösungsmitteln spülbar und mit Druckluft zu trocknen ist.

Gegenstand der vorliegenden Erfindung ist weiterhin die Verwendung der Reaktionsmischung als Dichtmasse, insbesondere zur Abdichtung von Undichtigkeiten in Rohren und/oder Rohrverbindungen und/oder Hausanschlüssen, vorzugsweise bei Abwasserkanälen.

Nach einer weiteren bevorzugten Ausführungsform betrifft die vorliegende Erfindung schließlich die Verwendung einer Mischkammer für einen Packer zum Einsatz in einem Verfahren der zuvor erläuterten Art, d.h. zum Sanieren der Rohrverbindungen und / oder Hausanschlüsse von Rohrleitungen, insbesondere Abwasserleitungen, mit zwei voneinander getrennten Einlässen, durch die beiden Komponenten des Reaktionsgemisches der zuvor erläuterten Art in die Kammer einleitbar sind, und einem Auslaß, durch den das fertige Reaktionsgemisch aus der Kammer herausleitbar ist, wobei das Innere der Kammer einen Rotor aufweist, durch den die Komponenten mischbar sind.

Bevorzugt geschieht dies in der Weise, daß mit der Mischkammer die zwei Komponenten der Reaktionsmischung mit Viskositäten von 1 bis zu 10⁶ mPa*s, einem Füllstoffanteil von bis zu 30 Gewichtsprozent und einem Mischungsverhältnis von bis zu 1000:1 mischbar sind.

Weiter bevorzugt ist es, die Mischkammer so auszugestalten, daß sie mit Lösungsmitteln spülbar und mit Druckluft zu trocknen ist.

Nachfolgend wird die erfindungsgemäße Reaktionsmischung durch ein Herstellungsbeispiel näher erläutert.

Eine Reaktionsmischung wurde aus einer Polyol-Komponente und einer Polyisocyanat-Komponente in einem Gewichtverhältnis von 100:19 durch inniges Mischen hergestellt. Die 19 Anteile der Polyisocyanat-Komponente bestanden dabei aus Diphenylmethan4,4'-diisocyanat (MDI), erhältlich z.B. unter der Bezeichnung A 328 von der AIK Flammadur Brandschutz GmbH in D-34123 Kassel. Die 100 Anteile der Polyol-Komponente spalten sich auf in 74 % Gewichtsprozent eines Gemisches aus aliphatischen und aromatischen Polyolen, ebenfalls erhältlich bei der Firma AIK unter der Bezeichnung A 248, sowie weiteren Zusatzstoffen. Bei diesem Polyol-Material handelt es sich um ein stark hydrophobes Polyurethan-Harz, das selbst unter Wassereinwirkung nicht aufschäumt.

4 Gewichtsprozent der Polyol-Komponente entfallen auf thermoplastische Mikroperlen, die z.B. unter dem Handelsnamen F-30D von CHUGAI BOYEKI CO. LTD., TOKYO, JAPAN erhältlich sind. Diese Mikroperlen bestehen aus einer VinylidenchloridAcrylnitril-Copolymerhülle mit darin verkapseltem Isobutan als Treibmittel und expandieren bei einer Aktivierungstemperatur von 80 °C.

Zur Beschleunigung der Reaktion enthält die Mischung 1 Gewichtsprozent einer üblichen Zinnverbindung, z.B. Dibutylzinndilaurat als Katalysator. Durch diesen Katalysator sind Topf- und Aushärtungszeiten einstellbar. Weiterhin wirkt sich die eingestellte Reaktionsgeschwindigkeit auch auf die maximale Reaktionstemperatur aus.

Zur weiteren Temperaturkontrolle und auch zur Beeinflussung der Materialhärte im ausgehärteten Zustand sind der Mischung 11 Gewichtsprozent Calciumcarbonat beigegeben. Zur zusätzlichen Beeinflussung der Temperaturleitfähigkeit enthält die Mischung 7,5 Gewichtsprozent Graphit, wodurch eine Homogenisierung der Temperaturverteilung erreicht wird. Zugleich ist Graphit auch als Absorptionsmaterial geeignet, bewirkt also als Absorber eine Strahlungserwärmung von außen.

Durch die Kombination der vorgenannten Füllstoffe wird ein zeitlicher Ablauf erreicht, wobei zunächst das Polyurethan aushärtet und erst dann die Mikroperlen im bereits erhärteten Trägermaterial expandieren. Die so erzeugte Expansion der Reaktionsmischung ist im Unterschied zum Schäumen von Polyurethan-Isotrop. Obwohl das zu füllende Volumen eine Leckstelle aufweist, wird ein Anpressdruck an allen Leckflächen erzielt.

Ein gängiges amorphes Aluminium-Silikat ist mit 1,5 Gewichtsprozent der Mischung als Molekularsieb zugefügt und bewirkt eine Bindung von Wasser, welches sowohl aus der Mischung aus der Herstellung einzelner der Bestandteile als auch aus dem Kanal kommen kann. Ein weiteres Gewichtsprozent ist an Additiven zugefügt, die sich aus Absetzhemmern und Entgasungsmitteln zusammensetzen. Hierdurch wird die Bildung von Gasblasen und ein Absetzen der Füllstoffe verhindert.

Die aus den Komponenten zusammengemischte erfindungsgemäße Reaktionsmischung hat bei einer Verarbeitungstemperatur von 40 °C eine Topfzeit von 20 Sekunden und härtet in 5 Minuten vollständig aus. Die erstarrte Mischung erreicht dabei eine Härte von 75 Shore A, eine Reißfestigkeit (DIN 53455) von 3,0 MPa, eine Reißdehnung (DIN 53430) von 49,5 %, eine Wärmeleitfähigkeit (DIN 52612, 52613) von 0,385 W/mK und einen Längenausdehnungskoeffizienten (DIN 53752) von 288*10⁻⁶ m/mK. Die maximale erreichte Reaktionswärme liegt bei 100 °C, so daß weitestgehend die Bildung von Wasserdampf vermieden wird. Die Wasseraufnahme liegt selbst bei einer Lagerung von mehr als 4 Wochen unter 0,5 %.

Die folgenden Abbildungen dienen zur weiteren Erläuterung des Verfahrens und der Mischkammer. Es zeigen:
- Fig. 1:: Volumenänderung der Kugel in Abhängigkeit von der Temperatur
- Fig. 2:: mögliche Dichtzonen einer Rohrmuffe,
- Fig. 3:: Prinzip der Querdehnung in einer gedichteten Rohrmuffe
- Fig. 4:: einen Packer mit erfindungsgemäßer Mischkammer
- Fig. 5:: Schematischer Aufbau der Mischkammer

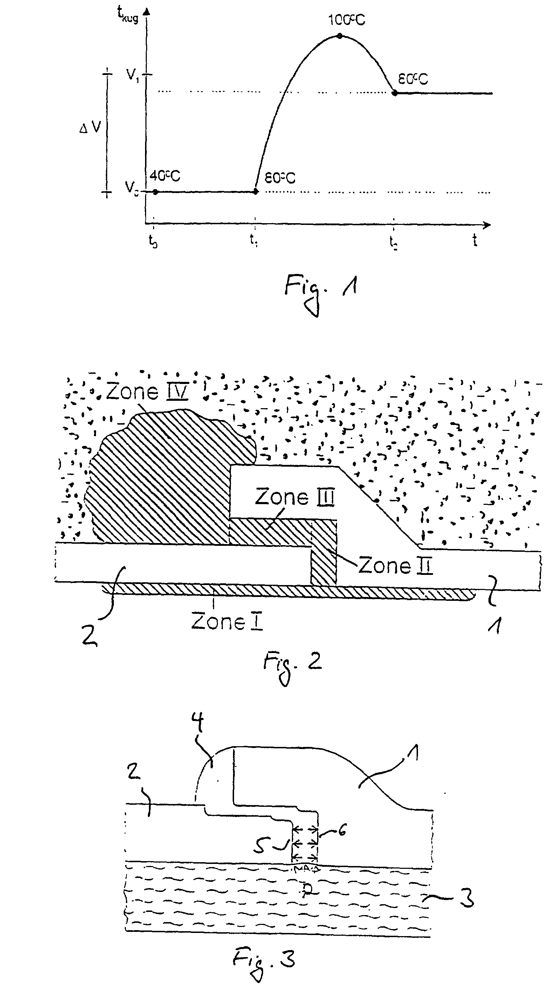

Die Figur 1 beschreibt die Volumenzunahme der im vorgenannten Herstellungsbeispiel eingesetzten Mikroperlen in Abhängigkeit von der entstehenden Reaktionswärme nach der Vermischung der beiden Komponenten. Die Temperatur steigt während der Reaktion von der Verarbeitungstemperatur t₀, die 40 °C beträgt, bis auf 100 °C an. Bis zu einer Temperatur von t₁=80 °C ist die thermoplastische Hülle der Mikroperlen fest. Ab dieser Temperatur, bei der das Reaktionsgemisch bereits erstarrt ist, erweicht jedoch die Hülle und die Perlen können unter dem Druck des Treibmittels, daß sich ebenfalls der Temperatur folgend ausdehnt, expandieren. Die Expansion erreicht Ihr Maximum bei 100 °C, der maximalen Temperatur. Im Verlauf der Abkühlung der Reaktionsmasse schrumpft auch wieder das Volumen der Mikroperlen, wobei aber bei einer Temperatur von t₂=80 °C die Hülle dieser Kugeln wieder fest wird und dadurch keine weitere Schrumpfung der Perlen stattfindet. Die durch diesen Prozeß hervorgerufene Volumenvergrößerung ΔV der erstarrten Reaktionsmasse erzeugt eine Überkompensation der allgemeinen bereits oben erwähnten Schrumpfung der Mischung, so daß sich mit der erfindungsgemäßen Reaktionsmischung eine effektive Volumenausdehnung von 10 Prozent ergibt, aus der in der zu dichtenden Rohrverbindung ein Kompressionsdruck resultiert, der die Dichtung unterstützt.

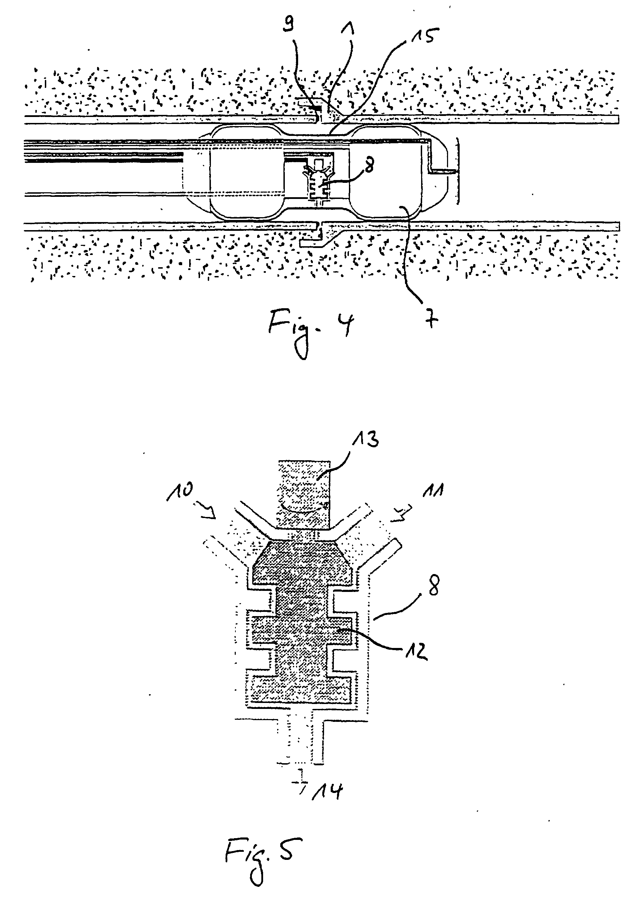

Die Figur 2 zeigt schematisch im Schnitt den oberen Teil einer Rohrmuffe 1, in die ein Rohr 2 eingeschoben ist. Aus der Figur ist zu entnehmen, daß es mehrere Zonen gibt, in die eine Dichtmasse eindringen kann. Bei dem Verfahren, bei dem die erfindungsgemäße Reaktionsmischung als Dichtmasse verwendet wird, wird vorteilhafterweise die mit II bezeichnete Zone gefüllt, wobei immer auch Dichtmasse in die Zonen III und IV eintreten kann.

Die Zone II, die erforderlichenfalls mechanisch vorbehandelt weiden kann, hat hier eine besondere Bedeutung, da hier mit der elastischen Dichtung auch das Prinzip der Querdehnung elastischer Körper ausgenutzt werden kann. Diese Prinzip ist in der Figur 3 näher verdeutlicht. Wirkt ein Druck P durch Kanalwasser 3 in Pfeilrichtung auf die kurze Seite der Dichtung 4 zwischen Rohrende und Stirnseite 6 der Muffe 1, so ergibt sich durch die Verformung der Dichtung 4 ein Kompressionsdruck senkrecht zum einwirkenden Druck P. Hierdurch wird die Dichtwirkung gegenüber drückenden Medien nochmals verbessert.

Die Figur 4 zeigt einen typischen Packer 7 zur Sanierung von Rohrverbindungen in Abwasserkanälen. Im Unterschied zu Packern nach dem Stand der Technik (DE-A 42 32 059) ist bei diesem Packer 7, der in dem Verfahren zur Verarbeitung der erfindungsgemäßen Reaktionsmischung eingesetzt wird, ein mittlerer Bereich 15 der äußeren aufblasbaren Membran elektrisch beheizbar, um ein schnelleres Aushärten der Dichtmasse an der Kontaktfläche zum Packer zu bewirken. Dies ermöglicht eine schnellere Entschalung. In der Mitte des Packers befindet sich eine Mischkammer 8, die in der Figur 5 genauer dargestellt ist. Diese Mischkammer 8 ist direkt über einer schadhaften Rohrverbindung 1 angeordnet. Durch die Mischkammer kann nach der Mischung das erfindungsgemäße Reaktionsgemisch in den Ringbereich 9 der Muffe 1 eingespritzt werden. Während der Einspritzung wird bei dem Verfahren mit Verwendung des erfindungsgemäßen Reaktionsgemisches der Einspritzdruck, die Einspritzmenge und die Verarbeitungstemperatur kontrolliert. Durch eine Heizung der einzelnen Packerkomponenten wird dabei die Fließfähigkeit des Gemisches und die Topfzeit konstant gehalten.

Die verwendete und in der Figur 5 dargestellte Mischkammer 8 weist zwei Einlässe 10 und 11 auf durch die die beiden zu mischenden Komponenten in die Kammer 8 eingeleitet werden. Innerhalb der Kammer werden die Komponenten durch den Rotor 12, der durch einen Antrieb 13 in Rotation versetzt wird, vermischt und durch die nachgedrückten Einzelkomponenten aus der Auslaßöffnung 14 herausgepreßt. Das Mischungsverhältnis von 100:19 der beiden Komponenten ergibt sich durch die Mengen, die der Kammer durch die Einlässe zugeführt werden.

## Patentansprüche

1. Reaktionsmischung mit mehreren Komponenten auf Basis eines hochhydrolysebeständigen 2-komponentigen Polyurethansystems, insbesondere zur Abdichtung von Rohrverbindungen von Rohrleitungen, beispielsweise in Abwasserkanälen, wobei die Reaktionsmischung, bezogen auf die Gesamtmischung, ein Gemisch aus 70 bis 99 Gewichtsprozent des 2-komponentigen Polyurethansystems mit weiteren Inhaltsstoffen und 1 bis 30 Gewichtsprozent Mikroperlen aufweist, wobei diese Reaktionsmischung weiterhin 0,5 bis 30 Gewichtsteile wenigstens eines thermodynamisch aktiven Mittels, bezogen auf 100 Gewichtsteile der Reaktionsmischung, enthält, wobei das thermodynamisch aktive Mittel ein Wärmeleiter und / oder ein Mikrowellen oder Infrarot bis Ultraviolettstrahlenabsorbierendes Mittel aus der Gruppe der Pulver oder Granulate von Metallen, der Pulver oder Granulate von Siliziumcarbid, Aluminiumoxid, Aluminiumnitrid, Ruß, Graphit, Aktivkohle, Glimmer und Mischungen davon, der Ferrite , der Farbstoffe oder in Mineralien oder Mikrokugeln gebundenes Wasser ist.

2. Reaktionsmischung nach Anspruch 1, **dadurch gekennzeichnet, daß** das Polyurethansystem aus zwei Komponenten in einem Mischungsverhältnis von 100:10 bis 100:100, vorzugsweise 100:10 bis 100:40, gemischt und/oder mischbar ist.

3. Reaktionsmischung nach einem der vorherigen Ansprüche, **dadurch gekennzeichnet, daß** die eine Komponente des Polyurethansystems hochhydrolyse-beständige aliphatische und/oder aromatische Polyole und die andere Komponente des Polyurethansystems ein Polyisocyanat, insbesondere ein aromatisches Diisocyanat, enthält.

4. Reaktionsmischung nach einem der vorherigen Ansprüche, **dadurch** **gekennzeichnet, daß** sie eine einstellbare und/oder eingestellte Topfzeit von 5 bis 120 Sekunden aufweist.

5. Reaktionsmischung nach einem der vorherigen Ansprüche, **dadurch gekennzeichnet, daß** sie eine einstellbare Aushärtungszeit von 2 bis 60 Minuten aufweist.

6. Reaktionsmischung nach einem der vorherigen Ansprüche, **dadurch gekennzeichnet, daß** die Mikroperlen ab einer definierten Aktivierungstemperatur oberhalb von 50 Grad Celsius im Volumen vergrößerbar sind.

7. Reaktionsmischung nach einem der vorherigen Ansprüche, **dadurch gekennzeichnet, daß** sie mehrere Mikroperlen mit unterschiedlichen Aktivierungstemperaturen enthält.

8. Reaktionsmischung nach einem der vorherigen Ansprüche, **dadurch gekennzeichnet, daß** die Volumenvergrößerung der Mikroperlen durch die Reaktionswärme initiierbar ist.

9. Reaktionsmischung nach einem der vorherigen Ansprüche, **dadurch gekennzeichnet, daß** die Volumenvergrößerung der Mikroperlen durch von außen zugeführte Wärme und/oder elektromagnetische Strahlung mit einer Wellenlänge von 10⁻² pm bis 1 m, vorzugsweise von 10 nm bis 1 m, initiierbar ist.

10. Reaktionsmischung nach einem der vorherigen Ansprüche, **dadurch gekennzeichnet, daß** die Volumenvergrößerung der Mikroperlen nach dem vollständigen Aushärten der Reaktionsmischung initiierbar ist.

11. Reaktionsmischung nach einem der vorherigen Ansprüche, **dadurch gekennzeichnet, daß** die Mikroperlen aus 5 bis 300 Mikrometer großen Mikroperlen bestehen, die ein Treibmittel als Kern aufweisen, das gegenüber der Perlenhülle wenigstens 6 Monate inert ist und einen Siedepunkt zwischen -100 und +10 Grad Celsius aufweist.

12. Reaktionsmischung nach einem der vorherigen Ansprüche, **dadurch gekennzeichnet, daß** die Hüllen der Mikroperlen aus thermoplastischem Vinylidenchlorid-Acrylnitril-Copolymer bestehen und das Treibmittel ausgewählt ist aus gegebenenfalls halogenierten Kohlenwasserstoffen und Olefinen.

13. Reaktionsmischung nach einem der vorherigen Ansprüche, **dadurch gekennzeichnet, daß** mindestens eine Komponente der Reaktionsmischung, vorzugsweise die Polyol-Komponente weitere Füllstoffe, Katalysatoren, Molekularsiebe, Entgasungsmittel und Absetzhemmer enthält.

14. Reaktionsmischung nach einem der vorherigen Ansprüche, **dadurch gekennzeichnet, daß** die Reaktionsmischung, bezogen auf die Gesamtmischung, 0 bis 3 Gewichtsprozent des Katalysators, 0 bis 20 Gewichtsprozent eines Füllstoffs, 0 bis 15 Gewichtsprozent Graphit, 0 bis 3 Gewichtsprozent des Molekularsiebs zum Binden von Wasser, 0 bis 3 Gewichtsprozent Entgasungsmittel und 0 bis 3 Gewichtsprozent Absetzhemmer umfaßt.

15. Verfahren zum Sanieren der Rohrverbindungen und/oder Hausanschlüssen von Rohrleitungen, insbesondere Abwasserleitungen, wobei man unter Verwendung eines Packers eine Reaktionsmasse nach den Ansprüchen 1 bis 14 als Dichtmasse, die in einer Mischkammer des Packers aus mindestens zwei Komponenten entstanden ist, unter Druck aus der Mischkammer in den zu sanierenden Rohrleitungsbereich einspritzt und im behandelten Rohrleitungsbereich insgesamt einen bleibenden Preßdruck der Einzelelemente dadurch erzielt, daß die Reaktionsmischung nach ihrem Erstarren durch Volumenvergrößerung einen bleibenden Druck auf ihre Umgebung ausübt.

16. Verfahren nach Anspruch 15, **dadurch gekennzeichnet, daß** das Volumen der Reaktionsmischung durch eine Ausdehnung der Mikroperlen während des Aushärtungsprozesses vergrößert wird.

17. Verfahren nach Anspruch 15 oder 16, **dadurch gekennzeichnet, daß** das Volumen durch eine Aufheizung der Reaktionsmischung nach dem vollständigen Aushärten, insbesondere durch Mikrowellenheizung, vergrößert wird.

18. Verfahren nach den Ansprüchen 15 bis 17, **dadurch gekennzeichnet, daß** durch Messung des Einspritzdruckes, der Einspritzmenge und der Verarbeitungstemperatur beider Komponenten der Einspritzvorgang kontrolliert wird.

19. Verfahren nach den Ansprüchen 15 bis 18, **dadurch gekennzeichnet, daß** durch Heizung der Komponenten die Topfzeit des Reaktionsgemisches gesteuert wird.

20. Verfahren nach den Ansprüchen 15 bis 19, **dadurch gekennzeichnet, daß** die Mischkammer nach der Einspritzung mit der polyolhaltigen Komponente gespült wird, die über ein Ventil vor der nächsten Einspritzung in einen Auffangbehälter innerhalb des Packers geleitet wird.

21. Verfahren nach den Ansprüchen 15 bis 20, **dadurch gekennzeichnet, daß** die Mischkammer mit einem Lösungsmittel gespült und anschließend mit Luft getrocknet wird.

22. Verwendung der Reaktionsmischung nach Ansprüchen 1 bis 14 als Dichtmasse, insbesondere zur Abdichtung von Undichtigkeiten in Rohren und/oder Rohrverbindungen und/oder Hausanschlüssen, vorzugsweise bei Abwasserkanälen.

23. Verwendung einer Mischkammer für einen Packer zum Einsatz in einem Verfahren nach den Ansprüchen 15 bis 21 zum Sanieren der Rohrverbindurigen und/oder Hausanschlüsse von Rohrleitungen, insbesondere Abwasserleitungen, mit zwei voneinander getrennten Einlässen, durch die beiden Komponenten des Reaktionsgemisches nach den Ansprüchen Anspruch 1 bis 14 in die Kammer einleitbar sind, und einem Auslaß, durch den das fertige Reaktionsgemisch aus der Kammer herausleitbar ist, **dadurch gekennzeichnet, daß** das Innere der Kammer einen Rotor aufweist, durch den die Komponenten mischbar sind.

24. Verwendung nach Anspruch 23, **dadurch gekennzeichnet, daß** mit der Mischkammer die zwei Komponenten der Reaktionsmischung mit Viskositäten von 1 bis zu 10⁶ mPa*s, einem Füllstoffanteil von bis zu 30 Gewichtsprozent und einem Mischungsverhältnis von bis zu 1000:1 mischbar sind.

25. Verwendung nach den Ansprüchen 23 oder 24, **dadurch gekennzeichnet, daß** die Mischkammer mit Lösungsmitteln spülbar und mit Druckluft zu trocknen ist.

## Claims

1. Reaction mixture having several components on the basis of a two-component polyurethane system that is highly resistant to hydrolysis, particularly for purposes of sealing pipe joints in pipelines such as, for example, in sewers, whereby the reaction mixture, relative to the total mixture, contains a mixture consisting of 70% to 99% by weight of the two-component polyurethane system with additional components and 1% to 30% by weight of microbeads, whereby this reaction mixture also contains 0.5 to 30 parts by weight of at least one thermodynamically active agent, relative to 100 parts by weight of the reaction mixture, wherein the thermodynamically active agent is a heat conductor and/or is either a microwave-absorbing agent or an agent that absorbs radiation in the infrared to ultraviolet range selected from the group consisting of a powder or granules of a metal, of a powder or granules of a silicon carbide, aluminium oxide, aluminium nitride, carbon black, graphite, active charcoal, mica or else a mixture of the substances cited, ferrites, dyes and/or water that is bound in minerals or microbeads.

2. Reaction mixture according to Claim 1, **characterized in that** the polyurethane system is mixed and/or can be mixed out of two components at a mixing ratio between 100 : 10 and 100 : 100, preferably between 100 : 10 and 100 : 40.

3. Reaction mixture according to one of the preceding Claims, **characterized in that** one of the components of the polyurethane system comprises aliphatic and/or aromatic polyols that are highly resistant to hydrolysis, while the other component of the polyurethane system contains a polyisocyanate, especially an aromatic diisocyanate.

4. Reaction mixture according to one of the preceding Claims, **characterized in that** it has an adjustable and/or adjusted pot life ranging from 5 to 120 seconds.

5. Reaction mixture according to one of the preceding Claims, **characterized in that** it has an adjustable cure time ranging from 2 to 60 minutes.

6. Reaction mixture according to one of the preceding Claims, **characterized in that** the volume of the microbeads can be increased starting at a defined activation temperature above 50°C.

7. Reaction mixture according to one of the preceding Claims, **characterized in that** it comprises several microbeads having different activation temperatures.

8. Reaction mixture according to one of the preceding Claims, **characterized in that** the increase in the volume of the microbeads can be initiated by the reaction heat.

9. Reaction mixture according to one of the preceding Claims, **characterized in that** the increase in the volume of the microbeads can be initiated by heat fed from the outside and/or by electromagnetic radiation having a wavelength of 10⁻² pm to 1 m, preferably from 10 nm to 1 m.

10. Reaction mixture according to one of the preceding Claims, **characterized in that** the increase in the volume of the microbeads can be initiated after the reaction mixture has cured completely.

11. Reaction mixture according to one of the preceding Claims, **characterized in that** the microbeads have a size ranging from 5 to 300 micrometers and their cores consist of a propellant that is inert vis-à-vis the bead shell for at least 6 months and that has a boiling point ranging from -100°C to +10°C.

12. Reaction mixture according to one of the preceding Claims, **characterized in that** the shells of the microbeads consist of thermoplastic vinylidene chlorideacrylonitrile copolymer and in that the propellant is selected from optionally halogenated hydrocarbons and olefins.

13. Reaction mixture according to one of the preceding Claims, **characterized in that** at least one of the components of the reaction mixture, preferably the polyol component, comprises additional fillers, catalysts, sieve sorbents, de-gassing agents and settling inhibitors.

14. Reaction mixture according to one of the preceding Claims, **characterized in that** the reaction mixture, relative to the total mixture, comprises 0% to 3% by weight of a catalyst, 0% to 20% by weight of a filler, 0% to 15% by weight of graphite, 0% to 3% by weight of the sieve sorbent for binding the water, 0% to 3% by weight of a de-gassing agent and 0% to 3% by weight of a settling inhibitor.

15. Process to repair pipe joints and/or building connection lines in pipelines, especially in sewer lines, whereby a packer is employed to inject a reaction compound according to Claims 1 through 14 as a sealing compound which has been created in the mixing chamber of the packer out of at least two components - under pressure out of the mixing chamber and into the pipeline area to be repaired, and a permanent compression force is achieved in the individual elements in the entire treated pipeline area in that the volume increase that occurs when the reaction mixture solidifies exerts a permanent pressure on its surroundings.

16. Process according to Claim 15, **characterized in that** the volume of the reaction mixture is increased by means of an expansion of the microbeads during the curing process.

17. Process according to Claim 15 or 16, **characterized in that** the volume is increased by heating up the reaction mixture, especially by means of microwave heat, after the curing is completed.

18. Process according to Claims 15 through 17, **characterised in that** the injection procedure is monitored by measuring the injection pressure, the injected quantity and the processing temperature of both components.

19. Process according to Claims 15 through 18, **characterised in that** the pot life of the reaction mixture is regulated by heating the components.

20. Process according to Claims 15 through 19, **characterised in that** the mixing chamber is rinsed with the component containing polyol alter the injection and this component is then conveyed by a valve to a collecting container inside the packer prior to the next injection operation.

21. Process according to Claims 15 through 20, **characterised in that** the mixing chamber is rinsed with a solvent and subsequently dried with air.

22. Use of the reaction mixture according to Claims 1 through 14 as a sealing compound, especially for purposes of sealing leaky sites in pipes and/or pipe joints and/or building connection lines, particularly in sewers.

23. Use of the mixing chamber for a packer to be used in a process according to Claims 15 through 21 for purposes of repairing pipe joints and/or building connection lines, especially sewage lines, with two separate inlets through which the two components of the reaction mixture according to Claims 1 through 14 can be fed into the chamber, and with an outlet through which the ready-mixed reaction mixture can be conveyed out of the chamber, **characterised in that** there is rotor inside the chamber that can be used to mix the components.

24. Use according to Claim 23, **characterised in that** the two components of the reaction mixture, with viscosities ranging from 1 to 10⁶ mPa *s, a filler fraction of up to 30% by weight and a mixing ratio of up to 1000:1, can be mixed in the chamber.

25. Use according to Claim 23 or 24, **characterised in that** it can be rinsed with solvents and dried with pressurised air.

## Revendications

1. Mélange réactionnel à plusieurs composants à base d'un système polyuréthanne à deux composants hautement résistant à l'hydrolyse, destiné en particulier à rendre étanches des joints de canalisation, par exemple dans des conduites d'eaux usées, dans lequel le mélange réactionnel contient, ramené au mélange total, un mélange de 70 à 99% en poids du système polyuréthanne à deux composants avec d'autres substances contenues et de 1 à 30% en poids de microperles, dans lequel ce mélange réactionnel contient en plus de 0,5 à 30 parties en poids d'au moins un agent thermodynamiquement actif, pour 100 parties en poids du mélange réactionnel, dans lequel l'agent thermodynamiquement actif est un conducteur de chaleur et/ou un agent absorbant les micro-ondes, les rayonnements infrarouges ou les rayonnements ultraviolets choisi dans le groupe comprenant des poudres ou granulés de métaux, des poudres ou granulés de carbure de silicium, oxyde d'aluminium, nitrure d'aluminium, noir de fumée, graphite, charbon actif, mica et des mélanges de ceux-ci, des ferrites, des colorants ou de l'eau liée dans des minéraux ou des microbilles.

2. Mélange réactionnel selon la revendication 1, caractérisé en ce que le système polyuréthanne est mélangé et/ou miscible à partir de deux composants selon un rapport de mélangeage de 100:10 à 100:100, de préférence de 100:10 à 100:40.

3. Mélange réactionnel selon l'une des revendications précédentes, caractérisé en ce que l'un des composants du système polyuréthanne contient des polyols aliphatiques et/ou aromatiques hautement résistants à l'hydrolyse, et en ce que l'autre composant du système polyuréthanne contient un polyisocyanate, notamment un diisocyanate aromatique.

4. Mélange réactionnel selon l'une des revendications précédentes, caractérisé en ce qu'il présente une vie en pot réglable et/ou réglée de 5 à 120 secondes.

5. Mélange réactionnel selon l'une des revendications précédentes, caractérisé en ce qu'il présente un temps de durcissement réglable de 2 à 60 minutes.

6. Mélange réactionnel selon l'une des revendications précédentes, caractérisé en ce que les microperles peuvent augmenter de volume à partir d'une température d'activation définie supérieure à 50 degrés Celsius.

7. Mélange réactionnel selon l'une des revendications précédentes, caractérisé en ce qu'il contient plusieurs microperles ayant des températures d'activation différentes.

8. Mélange réactionnel selon l'une des revendications précédentes, caractérisé en ce que l'augmentation de volume des microperles peut être déclenchée par la chaleur de la réaction.

9. Mélange réactionnel selon l'une des revendications précédentes, caractérisé en ce que l'augmentation de volume des microperles peut être déclenchée par un apport de chaleur venant de l'extérieur et/ou par un rayonnement électromagnétique d'une longueur d'onde de 10² pm à 1 m, de préférence de 10 nm à 1 m.

10. Mélange réactionnel selon l'une des revendications précédentes, caractérisé en ce que l'augmentation de volume des microperles peut être déclenchée après le durcissement complet du mélange réactionnel.

11. Mélange réactionnel selon l'une des revendications précédentes, caractérisé en ce que les microperles consistent en des microperles d'une taille de 5 à 300 micromètres présentant comme noyau un agent gonflant qui est inerte pendant au moins six mois par rapport à l'enveloppe de la perle et qui présente un point d'ébullition compris entre -100 et +10 degrés Celsius.

12. Mélange réactionnel selon l'une des revendications précédentes, caractérisé en ce que les enveloppes des microperles se composent d'un copolymère thermoplastique de chlorure de vinylidène et d'acrylonitrile, et en ce que l'agent gonflant est choisi parmi des hydrocarbures et oléfines halogénés le cas échéant.

13. Mélange réactionnel selon l'une des revendications précédentes, caractérisé en ce qu'au moins un composant du mélange réactionnel, de préférence le composant polyol, contient d'autres matières de charge, catalyseurs, tamis moléculaires, agents de dégazage et inhibiteurs de ségrégation.

14. Mélange réactionnel selon l'une des revendications précédentes, caractérisé en ce que le mélange réactionnel comprend, par rapport au mélange total, de 0 à 3% en poids du catalyseur, de 0 à 20% en poids d'une matière de charge, de 0 à 15% en poids de graphite, de 0 à 3% en poids du tamis moléculaire pour lier l'eau, de 0 à 3% en poids d'agent de dégazage, et de 0 à 3% en poids d'inhibiteur de ségrégation.

15. Procédé de rénovation de joints de canalisation et/ou de raccordements domestiques de canalisations, notamment des conduites d'eaux usées, dans lequel, en se servant d'un bourroir, on injecte en tant que masse d'étanchéité un mélange réactionnel selon les revendications 1 à 14, obtenu à partir d'au moins deux composants dans une chambre de mélangeage du bourroir, sous pression à partir de la chambre de mélangeage dans la zone de la canalisation à rénover et on établit dans la zone traitée de la canalisation une pression de compression globalement constante grâce à la pression constante exercée sur son environnement par le mélange réactionnel du fait de son augmentation de volume après la solidification.

16. Procédé selon la revendication 15, caractérisé en ce que le volume du mélange réactionnel est augmenté par une dilatation des microperles au cours du processus de durcissement.

17. Procédé selon la revendication 15 ou la revendication 16, caractérisé en ce que le volume est augmenté par chauffage du mélange réactionnel après durcissement complet, en particulier par chauffage à micro-ondes.

18. Procédé selon les revendications 15 à 17, caractérisé en ce que l'opération d'injection est contrôlée en mesurant la pression d'injection, la quantité injectée et la température de mise en oeuvre des deux composants.

19. Procédé selon les revendications 15 à 18, caractérisé en ce que la vie en pot du mélange réactionnel est régulée par chauffage des composants.

20. Procédé selon les revendications 15 à 19, caractérisé en ce que la chambre de mélangeage est rincée après injection avec le composant contenant un polyol, qui est amené par l'intermédiaire d'une soupape dans un récipient collecteur à l'intérieur du bourroir avant l'injection suivante.

21. Procédé selon les revendications 15 à 20, caractérisé en ce que la chambre de mélangeage est rincée avec un solvant et ensuite séchée avec de l'air.

22. Utilisation du mélange réactionnel selon les revendications 1 à 14 comme masse d'étanchéité, en particulier pour le colmatage de défauts d'étanchéité dans des canalisations et/ou des joints de canalisation et/ou des raccordements domestiques, de préférence dans des conduites d'eaux usées.

23. Utilisation d'une chambre de mélangeage pour un bourroir destiné à être utilisé dans un procédé selon les revendications 15 à 21 pour la rénovation de joints de canalisations et/ou de raccordements domestiques, en particulier des conduites d'eaux usées, avec deux entrées séparées l'une de l'autre par lesquelles les deux composants du mélange réactionnel selon les revendications 1 à 14 peuvent être introduits dans la chambre, et une sortie par laquelle le mélange réactionnel fini peut être éjecté de la chambre, caractérisée en ce que l'intérieur de la chambre présente un rotor grâce auquel les composants peuvent être mélangés.

24. Utilisation selon la revendication 23, caractérisée en ce que les deux composants du mélange réactionnel peuvent être mélangés par la chambre de mélangeage avec des viscosités de 1 à 10⁶ mPa*s, une proportion de matières de charge allant jusqu'à 30% en poids, et un rapport de mélangeage allant jusqu'à 1000:1.

25. Utilisation selon la revendication 23 ou la revendication 24, caractérisée en ce que la chambre de mélangeage peut être rincée avec des solvants et séchée à l'air comprimé.
